# EUROPÄISCHE PATENTSCHRIFT

(11) **EP 2 824 009 B1**
(45) Veröffentlichungstag und Bekanntmachung des Hinweises auf die Patenterteilung: **08.04.2020**
(21) Anmeldenummer: 14169779.7
(22) Anmeldetag: 26.05.2014
(51) Int. Cl.: B60W 50/14, B60W 30/095

(54) **VORRICHTUNG UND VERFAHREN ZUR KOLLISIONSWARNUNG FÜR EIN FORTBEWEGUNGSMITTEL**
DEVICE AND METHOD FOR COLLISION WARNING FOR A MEANS OF TRANSPORT
DISPOSITIF ET PROCÉDÉ D'AVERTISSEMENT ANTI-COLLISION POUR UN MOYEN DE DÉPLACEMENT

(30) Priorität: 01.07.2013 DE 102013212818
(43) Veröffentlichungstag der Anmeldung: 14.01.2015
(73) Patentinhaber: ROBERT BOSCH GMBH, 70442 Stuttgart (DE)
(72) Erfinder: Schoenherr, Michael, 71272 Renningen-Malmsheim (DE)

(56) Entgegenhaltungen:
- WO-A1-2012/045323
- DE-A1-102006 057 751
- DE-A1-102007 030 769
- DE-A1-102011 100 820

## Beschreibung

### Stand der Technik

Die vorliegende Erfindung betrifft ein Verfahren sowie eine Vorrichtung zur Kollisionswarnung für ein Fortbewegungsmittel. Insbesondere betrifft die vorliegende Erfindung eine verbesserte Signalisierung zur Vermeidung irreführender Signalisierungen.

Im Stand der Technik sind Fahrerassistenzsysteme zur Kollisionswarnung des Fahrers bekannt, welche seitlich des Fahrzeugs angeordnete Objekte erkennen und im Falle einer Kollisionsrelevanz eine Signalisierung an den Fahrer ausgeben. Diese sind sowohl während der Fahrt als Tote-Winkel-Assistenten, als auch während des Rangierens/Parkierens als Parkassistenzsysteme bekannt. Eine Weiterentwicklung ist das Side-Distance-Warning (SDW)-System, welches den Fahrer auch auf Objekte aufmerksam macht, welche sich seitlich vom Fahrzeug befinden. Hierfür werden keine zusätzlichen seitlichen Sensoren verwendet, sondern die gleichen Ultraschallsensoren, die auch für eine Parkmittelvermessung verwendet werden. Die Position der Objekte wird gespeichert und mit jeder Fahrzeugbewegung aktualisiert. Der Fahrer kann somit über seitliche Objekte informiert werden, ohne dass diese die ganze Zeit aktiv vermessen werden. Ein Problem bei dieser Methode besteht jedoch darin, dass Objekte zuerst mit den seitlichen Sensoren des vorderen oder des hinteren Stoßfängers detektiert werden müssen, bevor die Position durch die Software entsprechend der Fahrzeugbewegung aktualisiert werden kann. Beim Starten des Fahrzeugs muss somit erst eine gewisse Distanz zurückgelegt werden, damit das System den Fahrer über sämtliche seitliche Objekte informieren kann. Gerade die Startphase ist jedoch der kritische Fall bei Fahrzeugen, die entweder nicht übersichtlich sind oder beispielsweise keine Fenster im hinteren Seitenbereich und/oder im Heckbereich aufweisen, wie dies z.B. bei

Transportern der Fall ist. Es kommt daher immer wieder vor, dass gerade beim Ausparken Pfosten oder Säulen nicht gesehen werden und es somit zu Sachschäden kommt. Vor allem ist dies auf der dem Fahrer gegenüberliegenden Seite der Fall. Die DE 10 2012 200 753 offenbart die Idee, dass die Objekte beim Parken (Abstellen des Motors) im EEPROM gespeichert werden. Der Nachteil hierbei ist, dass keine Unterscheidung getroffen wird, ob die gespeicherten Objekte stationär sind oder nicht (z.B. Personen oder PKWs, die sich nach dem eigenen Parkvorgang entfernen). Somit kann es sein, dass beim Anlassen des Motors die Objekte (z.B. andere Fahrzeuge) in der Realität nicht mehr vorhanden sind, es aber trotzdem zu einer Warnung kommt, da das Objekt im EEPROM gespeichert war.

Aus WO 2012/045323 A1 ist ein Fahrerassistenzsystem bekannt, mit dem ein Fahrer eines Fahrzeugs vor Hindernissen in der Umgebung des Fahrzeugs gewarnt werden kann. Dazu werden Bilddaten der Umgebung des Fahrzeugs durch eine oder mehrere Kameras aufgenommen. Eine relative Position des Hindernisses in Bezug auf das Fahrzeug wird basierend auf den Bilddaten bestimmt. Weiterhin wird ein Lenkwinkel des Fahrzeugs erfasst, wobei basierend auf dem Lenkwinkel eine Trajektorie des Fahrzeugs bestimmt werden kann. Der Fahrer wird gewarnt, wenn ein vorbestimmtes Warnkriterium bezüglich der relativen Position des Hindernisses und dem Lenkwinkel erfüllt ist, insbesondere, wenn sich aufgrund der mittels des Lenkwinkels ermittelten Trajektorie eine Kollisionswahrscheinlichkeit mit dem Hindernis ergibt.

### Offenbarung der Erfindung

Um die vorgenannten Nachteile auszuräumen, schlägt die vorliegende Erfindung ein geändertes Verfahren zur Kollisionswarnung für ein Fortbewegungsmittel vor. Dieses umfasst einen Schritt eines Ermittelns eines kollisionsrelevanten Objektes in der Umgebung des Fortbewegungsmittels und Speichern der Position des Objektes in einem ersten Betriebszyklus des Fortbewegungsmittels, wenn das Objekt den Detektionsbereich des jeweiligen Sensors bereits verlassen hat, jedoch eine etwaige Kollisionsrelevanz in einem späteren Betriebszyklus hat. Das Ende des ersten Betriebszyklus' kann beispielsweise durch ein Parken, einen Motorstopp, ein Verlassen des Fahrzeugs oder eine vordefinierte Zeitdauer eines Verharrens an ein und demselben Ort gekennzeichnet sein. Wie in Verbindung mit dem Stand der Technik beschrieben, kann das Speichern beispielsweise in einem EEPROM eines elektrischen Steuergerätes erfolgen. Selbstverständlich können dabei Parameter wie Größe, Ausdehnung, Entfernung sowie Position bzw. Richtung des Objektes relativ zum Fahrzeug bzw. einem das Objekt erkennenden Sensors sein. Anschließend wird in einem zweiten Betriebszyklus eine Signalisierung im Ansprechen auf die gespeicherte Position ausgegeben, wenn die Position in einer ersten Umgebungsrichtung des Fortbewegungsmittels liegt. Dabei ist der zweite Betriebszyklus ein Betriebszyklus, welcher sich an den ersten Betriebszyklus (ggf. nach einer beliebig langen Pause) anschließt. Mit anderen Worten wird zunächst der erste Betriebszyklus, wie vorstehend beschrieben, beendet, und anschließend das Fahrzeug im zweiten Betriebszyklus wieder in Betrieb genommen. Dies kann beispielsweise durch Einstecken eines Zündschlüssels, Einsteigen in das Fahrzeug, Einschalten der Zündung bzw. Starten einer Antriebsmaschine des Fahrzeugs erkannt werden. Die Signalisierung kann dabei sowohl an einen Anwender des Fahrzeugs als auch an ein weiterführendes Fahrerassistenzsystem ergehen. Auf diese Weise kann sowohl der Anwender, als auch die Fahrzeugelektronik die gespeicherte Position des kollisionsrelevanten Objektes im weiteren Fahrtverlauf berücksichtigen. Das Fortbewegungsmittel kann beispielsweise ein Straßenfahrzeug sein. Die erste Umgebungsrichtung des Fortbewegungsmittels kann beispielsweise die Beifahrerseite des Fahrzeugs sein. Alternativ oder zusätzlich kann jede Position als innerhalb der ersten Umgebungsrichtung liegend definiert sein, in welcher das Fortbewegungsmittel durch den Anwender beispielsweise schlecht einsehbar ist und/oder ein Verändern der Positionen erfasster kollisionsrelevanter Objekte zwischen dem ersten Betriebszyklus und dem zweiten Betriebszyklus unwahrscheinlich bis unmöglich ist. Im Gegensatz hierzu wird die Signalisierung in einem zweiten Betriebszyklus des Fortbewegungsmittels im Ansprechen auf die gespeicherte Position dann unterlassen, wenn die Position in einer zweiten Umgebungsrichtung des Fortbewegungsmittels liegt. Dabei sind die zweite Umgebungsrichtung und die erste Umgebungsrichtung als nicht überlappend definiert. Die zweite Umgebungsrichtung kann beispielsweise eine solche Ausrichtung haben, in welcher während des Beendens des ersten Betriebszyklus vorbeifahrende Fahrzeuge grundsätzlich kollisionsrelevante Positionen einnehmen und durch das Verfahren als kollisionsrelevantes Objekt abgespeichert werden können. Aufgrund des erfindungsgemäßen Unterlassens der Signalisierung in dem zweiten Betriebszyklus für eben solche Objekte in der zweiten Umgebungsrichtung können irreführende Signalisierungen an den Anwender und/oder die Fahrzeugelektronik unterdrückt bzw. unterlassen werden, während eine Berücksichtigung mit einem hohen Wahrscheinlichkeitsgrad unnütz oder gar irreführend wäre. Selbstverständlich kann das erfindungsgemäße Verfahren einen Schritt umfassen, in welchem während des ersten Betriebszyklus' und/oder während des zweiten Betriebszyklus' die erste Umgebungsrichtung und die zweite Umgebungsrichtung in Abhängigkeit der aktuellen Position des Fortbewegungsmittels hinsichtlich seiner Umgebung festgelegt werden. Mit anderen Worten kann das erfindungsgemäße Verfahren einen Schritt umfassen, in welchem die Umgebung (oder Teilen bzw. Sektoren davon) des Fortbewegungsmittels in "aktuell kollisionsrelevant" bzw. "aktuell nicht-kollisionsrelevant" unterteilt wird. Dabei müssen die erste Umgebungsrichtung und die zweite Umgebungsrichtung nicht ausschließlich zusammenhängend definiert werden, sondern können disjunkten-Sektoren in der Umgebung des Fortbewegungsmittels angehören. Diese bevorzugte Ausgestaltung kann beispielsweise eine Unterscheidung zwischen einer fahrstreifenparallelen Parkposition und einer Taschenparkposition vornehmen. Auf diese Weise kann eine irreführende Signalisierung in Abhängigkeit und unter Berücksichtigung der aktuellen Position des Fortbewegungsmittels vermieden werden.

Die Unteransprüche zeigen bevorzugte Weiterbildungen der Erfindung.

Weiter bevorzugt umfasst das Verfahren den Schritt eines Prüfens der Position des Objektes hinsichtlich der ersten Umgebungsrichtung des Fortbewegungsmittels und/oder der zweiten Umgebungsrichtung des Fortbewegungsmittels in dem ersten Betriebszyklus. Mit anderen Worten wird bereits während des ersten Betriebszyklus die Position eines kollisionsrelevanten Objektes dahingehend geprüft, ob die Kollisionsrelevanz eines ermittelten Umgebungsobjektes auch in dem zweiten Betriebszyklus fortbestehen wird. Hierzu können beispielsweise vordefinierte Schwellwerte für die Wahrscheinlichkeit abgespeichert sein, anhand welcher das Fortbestehen der Kollisionsrelevanz bewertet wird. Dies ermöglicht eine unmittelbare Warnung zu Beginn des zweiten Betriebszyklus, ohne dass während des zweiten Betriebszyklus bereits eine entsprechende Auswertung stattgefunden haben muss.

Weiter bevorzugt umfasst das erfindungsgemäße Verfahren den Schritt eines Kennzeichnens des der Position des Objektes zugeordneten Speichereintrages dahingehend, ob die Position in einer ersten oder zweiten Umgebungsrichtung des Fortbewegungsmittels liegt. Dabei kann dem Speichereintrag für die Position des Objektes beispielsweise ein Zusatz hinzugefügt werden, welcher die Position in der ersten bzw. der zweiten Umgebungsrichtung des Fortbewegungsmittels liegend kennzeichnet. Alternativ oder zusätzlich kann der Speichereintrag auch dadurch gekennzeichnet werden, dass er in einem bestimmten Speicherplatz (z.B. in einem bestimmten Steuergerät) vorgenommen wird. Auf diese Weise kann vermieden werden, dass zu Beginn des zweiten Betriebszyklus Speichereinträge berücksichtigt bzw. ausgewertet werden, welche während des ersten Betriebszyklus als (vermutlich) nicht kollisionsrelevant beurteilt wurden. Weiter bevorzugt umfasst das erfindungsgemäße Verfahren den Schritt eines Prüfens der Position des Umgebungsobjektes hinsichtlich der ersten Umgebungsrichtung des Fortbewegungsmittels und/oder hinsichtlich der zweiten Umgebungsrichtung des Fortbewegungsmittels in dem zweiten Betriebszyklus. Mit anderen Worten können zu Beginn des zweiten Betriebszyklus unterschiedliche Positionen kollisionsrelevanter Objekte ausgewertet werden, welche während des ersten Betriebszyklus ermittelt wurden. Dabei erfolgt die Klassifikation, ob es sich um ein weiterhin kollisionsrelevantes Objekt oder ein vermutlich nicht länger kollisionsrelevantes Objekt handelt, zu Beginn des zweiten Betriebszyklus. Dies ermöglicht den Vorteil, Auswertungen hinsichtlich der Kollisionsrelevanz gespeicherter Objekte nicht bereits am Ende des ersten Betriebszyklus durchführen zu müssen und z.B. ein rasches Einschlafen der Fahrzeugelektronik zu ermöglichen.

Bevorzugt ist die erste Umgebungsrichtung des Fortbewegungsmittels auf einer der Anwenderseite gegenüberliegenden Seite des Fortbewegungsmittels angeordnet. Mit anderen Worten ist die erste Umgebungsrichtung beispielsweise auf der Beifahrerseite eines Straßenfahrzeugs angeordnet, welche für den Fahrer des Fahrzeugs schlechter einsehbar ist und üblicherweise eine geringere Wahrscheinlichkeit für die Präsenz von Objekten bereithält, welche nach dem Beenden des Parkvorgangs ohnehin nicht mehr zugegen sind.

Weiter bevorzugt ist die zweite Umgebungsrichtung des Fortbewegungsmittels auf der Anwenderseite des Fortbewegungsmittels angeordnet. Mit anderen Worten fällt die zweite Umgebungsrichtung bei einem Fahrzeug als Fortbewegungsmittel beispielsweise mit der Fahrerseite zusammen. Mit anderen Worten wird auf der Fahrerseite einerseits eine bessere Übersicht für den Fahrer zu erwarten sein, andererseits die Wahrscheinlichkeit bestehen, dass vorbeifahrende Fahrzeuge als kollisionsrelevante Objekte ermittelt werden, obwohl die Kollisionsrelevanz in dem zweiten Betriebszyklus nicht (notwendigerweise) fortbesteht.

Die Signalisierung an den Anwender des Fortbewegungsmittels kann beispielsweise durch eine optische und/oder akustische Ausgabe einer Warnung, bevorzugt im Kombiinstrument des Fortbewegungsmittels, erfolgen. Eine Signalisierung an das Kombiinstrument ermöglicht darüber hinaus den Vorteil einer weiteren Verwendung der Signalisierung im Rahmen weiterer im Kombiinstrument realisierter oder zusammengeführter Fahrerassistenzsysteme. Erfindungsgemäß nimmt das Fortbewegungsmittel zwischen dem ersten Betriebszyklus und dem zweiten Betriebszyklus eine Parkposition ein. Geeignete Sensorik sorgt nun dafür, dass erkannt wird, inwiefern eine erneute Warnung hinsichtlich kollisionsrelevanter Objekte überhaupt erfolgen muss. Dabei kann beispielsweise ermittelt werden, dass der Anwender des Fahrzeugs seine Aufmerksamkeit zwischenzeitlich für andere Aufgaben verwendet und eine erneute Warnung bei Beginn des zweiten Betriebszyklus hinsichtlich der Kollisionsrelevanz von Umgebungsobjekten willkommen erscheint. Beispielsweise kann dies durch Prüfen einer Anwenderberechtigung (z.B. das (erneute) Einstecken eines Zündschlüssels in das Türschloss oder das Zündschloss des Fortbewegungsmittels) ermittelt werden. Alternativ oder zusätzlich kann auch eine Verwendung anderer Fahrzeugfunktionen (z.B. der Telefonfunktion oder der Infotainment-Anlage) des Fortbewegungsmittels das Ende des ersten Betriebszyklus kennzeichnen. Die vorstehend genannten Anwenderschritte stellen geeignete Möglichkeiten zur Unterscheidung zwischen dem ersten Betriebszyklus und dem zweiten Betriebszyklus dar.

Gemäß einem zweiten Aspekt der vorliegenden Erfindung wird eine Vorrichtung zur Erfassung des Umfeldes eines Fortbewegungsmittels vorgeschlagen. Die Vorrichtung umfasst eine Umfeldsensorik, welche beispielsweise Radar- und/oder, Lidar- und/oder, Ultraschall Sensoren verwenden kann. Zusätzlich umfasst die Vorrichtung eine Speichereinheit und eine Verarbeitungseinheit, bevorzugt umfassend einen Mikroprozessor, welche beide als gemeinsam verwendete Ressourcen auch für andere Fahrerassistenz- oder Fahrzeugfunktionen zur Verfügung stehen können. Erfindungsgemäß ist die Umfeldsensorik zum Ermitteln eines kollisionsrelevanten Objektes in der Umgebung des Fortbewegungsmittels eingerichtet. Die Speichereinheit ist eingerichtet, die Position des Objektes in einem ersten Betriebszyklus des Fortbewegungsmittels zu speichern. Die Verarbeitungseinrichtung ist erfindungsgemäß eingerichtet, die Schritte eines Verfahrens durchzuführen, wie es in Verbindung mit dem erstgenannten Erfindungsaspekt eingehend und im Detail beschrieben worden ist. Zur Vermeidung von Wiederholungen wird hinsichtlich möglicher Ausgestaltungen, Merkmalskombinationen sowie der Vorteile auf den erstgenannten Erfindungsaspekt verwiesen.

Gemäß einem dritten Aspekt der vorliegenden Erfindung wird ein Fahrzeug, umfassend eine Vorrichtung gemäß dem zweiten Erfindungsaspekt vorgeschlagen. Auch hinsichtlich des Fahrzeugs ergeben sich die in Verbindung mit dem erstgenannten und zweitgenannten Erfindungsaspekt gemachten Ausführungen zu Funktion, Merkmalskombinationen und Vorteile entsprechend, so dass auch diesbezüglich auf eine Wiederholung derselben verzichtet wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Draufsicht auf ein Fortbewegungsmittel, umfassend ein Ausführungsbeispiel einer erfindungsgemäßen Vorrichtung; und
- Figur 2: ein Flussdiagramm, veranschaulichend die Schritte eines Ausführungsbeispiels des erfindungsgemäßen Verfahrens.

### Ausführungsformen der Erfindung

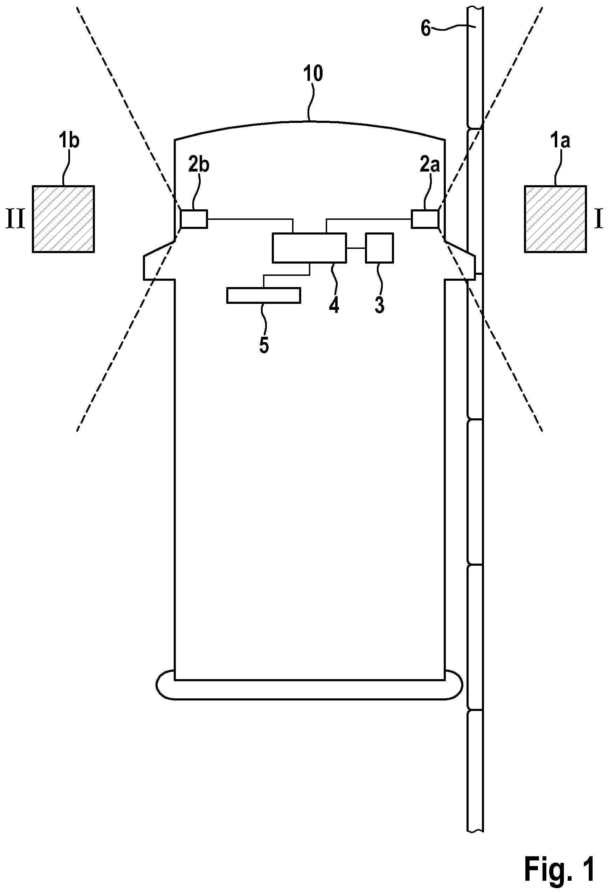

Figur 1 zeigt eine Draufsicht auf ein Fahrzeug 10 als Fortbewegungsmittel an einem Bordstein 6 (also dem rechten Fahrbahnrad). Während eines ersten Betriebszyklus' befindet sich im Erfassungsbereich eines ersten Ultraschallsensors 2a ein Objekt 1a, welches als feststehende Säule ausgestaltet ist. Selbst wenn diese Eigenschaft aus den Signalen des Ultraschallsensors 2a nicht ermittelbar sein sollte, kann aus der bloßen Tatsache, dass sich die Säule 1a auf der Beifahrerseite I als erste Umgebungsrichtung befindet, geschlossen werden, dass diese auch zu Beginn eines zweiten Betriebszyklus an derselben Position präsent sein wird, selbst wenn sie zu diesem Zeitpunkt nicht mehr im Erfassungsbereich des Ultraschallsensors 2a ist. Während des ersten Betriebszyklus' befindet sich im Erfassungsbereich eines fahrerseitigen Ultraschallsensors 2b weiter ein Fahrzeug 1b als Umgebungsobjekt. Aus der bloßen Tatsache, dass das Fahrzeug 1b auf der Fahrerseite II als zweite Umgebungsrichtung des Fahrzeugs 10 angeordnet ist, kann geschlossen werden, dass das Fahrzeug 1b zu Beginn eines zweiten Betriebszyklus mit hoher Wahrscheinlichkeit nicht mehr präsent (also kollisionsrelevant) sein wird, selbst wenn die vorherige Position des Fahrzeugs zu diesem Zeitpunkt nicht mehr im Erfassungsbereich des Ultraschallsensors 2b ist. Zur Auswertung der Signale des beifahrerseitigen Ultraschallsensors 2a sowie des fahrerseitigen Ultraschallsensors 2b ist ein Steuergerät 4 als Verarbeitungseinrichtung vorgesehen, welches Zugriff auf ein EEPROM 3 als Speichereinheit im Sinne der vorliegenden Erfindung hat. Das EEPROM 3 ist u. A. eingerichtet, Objektpositionen abzuspeichern, welche den Erfassungsbereich der Ultraschallsensoren 2a, 2b bereits verlassen haben, um in einem zweiten Betriebszyklus den Anwender vor einer etwaigen Kollision zu warnen, obwohl die Positionen den Erfassungsbereich der Ultraschallsensoren 2a, 2b bereits verlassen haben können. Zusätzlich ist das Steuergerät 4 an das Kombiinstrument 5 als Ausgabeeinheit angeschlossen, welches eingerichtet ist, den Anwender des Fahrzeugs 10 zu Beginn des zweiten Betriebszyklus zwar über das Vorhandensein der beifahrerseitigen Säule 1a, nicht jedoch über ein Vorhandensein des fahrerseitigen Fahrzeugs 1b zu informieren, obwohl beide als kollisionsrelevant während des ersten Betriebszyklus' abgespeichert worden sind. Auf diese Weise wird eine irreführende Ausgabe einer Signalisierung an den Anwender des Fahrzeugs 10 unterlassen, der sich somit ungestört seiner Fahraufgabe widmen kann.

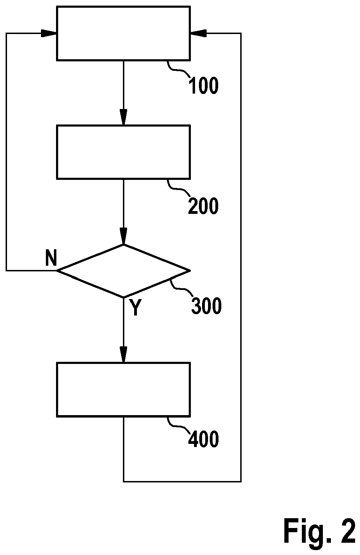

Figur 2 zeigt ein Flussdiagramm, veranschaulichend die Schritte eines Ausführungsbeispiels eines erfindungsgemäßen Verfahrens. Im Schritt 100 wird ein Umgebungsobjekt ermittelt. Aufgrund seiner Position wird das Objekt als kollisionsrelevant für das Ego-Fahrzeug klassifiziert. In Schritt 200 wird daher die Position des Objektes in einem EEPROM gespeichert, auch und insbesondere, wenn das Objekt den Detektionsbereich des jeweiligen Sensors bereits verlassen hat, eine Kollisionsrelevanz in einem späteren Betriebszyklus hat. Im Schritt 300 wird ermittelt, ob die Position auf der Beifahrerseite (erste Umgebungsrichtung) liegt. Ist dies der Fall (Y), erfolgt im Schritt 400 eine Ausgabeeinheit einer entsprechenden Signalisierung an den Anwender des Fahrzeugs. Ist dies jedoch nicht der Fall (N), wird eine Ausgabe einer Signalisierung an den Anwender des Fahrzeugs unterlassen. In beiden Fällen fährt das Verfahren anschließend mit der Durchführung des Schritts 100 fort.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zur Kollisionswarnung für ein Fortbewegungsmittel (10) umfassend die Schritte:
- Ermitteln (100) eines kollisionsrelevanten Objektes (1a, 1b) in der Umgebung des Fortbewegungsmittels (10),
- Speichern der Position des Objektes (1a, 1b) in einem ersten Betriebszyklus des Fortbewegungsmittels (10),
- Ausgeben (400) einer Signalisierung in einem zweiten Betriebszyklus des Fortbewegungsmittels im Ansprechen auf die gespeicherte Position, wenn die Position in einer ersten Umgebungsrichtung (I) des Fortbewegungsmittels (10) liegt wobei das Fortbewegungsmittel (10) zwischen dem ersten Betriebszyklus und dem zweiten Betriebszyklus eine Parkposition einnimmt und insbesondere eine Anwenderberechtigung vor Beginn des zweiten Betriebszyklus erneut abgefragt wird, und
- Unterlassen einer Signalisierung in einem zweiten Betriebszyklus des Fortbewegungsmittels (10) im Ansprechen auf die gespeicherte Position, wenn die Position in einer zweiten Umgebungsrichtung (II) des Fortbewegungsmittels (10) liegt.

2. Verfahren nach Anspruch 1, weiter umfassend den Schritt eines
- Prüfens der Position des Objektes hinsichtlich der ersten Umgebungsrichtung (I) des Fortbewegungsmittels (10) und/oder der zweiten Umgebungsrichtung (II) des Fortbewegungsmittels (10) in dem ersten Betriebszyklus.

3. Verfahren nach Anspruch 2, weiter umfassend den Schritt eines Kennzeichnens des der Position des Objektes zugeordneten Speichereintrages dahingehend, ob die Position in der ersten oder der zweiten Umgebungsrichtung des Fortbewegungsmittels (10) liegt.

4. Verfahren nach einem der vorstehenden Ansprüche, weiter umfassend den Schritt eines
- Prüfens der Position des Objektes (1a, 1b) hinsichtlich der ersten Umgebungsrichtung (I) des Fortbewegungsmittels (10) und/oder
- der zweiten Umgebungsrichtung (II) des Fortbewegungsmittels (10) in dem zweiten Betriebszyklus.

5. Verfahren nach einem der vorstehenden Ansprüche, wobei die erste Umgebungsrichtung (I) des Fortbewegungsmittels (10) auf einer der Anwenderseite gegenüberliegenden Seite des Fortbewegungsmittels (10) angeordnet ist.

6. Verfahren nach einem der vorstehenden Ansprüche, wobei die zweite Umgebungsrichtung (II) des Fortbewegungsmittels (10) auf der Anwenderseite des Fortbewegungsmittels (10) angeordnet ist.

7. Verfahren nach einem der vorstehenden Ansprüche, wobei die Signalisierung eine Warnung an einen Anwender des Fortbewegungsmittels (10) umfasst.

8. Vorrichtung zur Erfassung des Umfeldes eines Fortbewegungsmittels (10) umfassend
- eine Umfeldsensorik (2a, 2b),
- eine Speichereinheit (3), und
- eine Verarbeitungseinheit (4), wobei
- die Umfeldsensorik (2a, 2b) zum Ermitteln eines kollisionsrelevanten Objektes (1a, 1b) in der Umgebung des Fortbewegungsmittels (10) eingerichtet ist,
- die Speichereinheit (3) zum Abspeichern der Position des Objektes (2a, 2b) in einem ersten Betriebszyklus des Fortbewegungsmittels (10) eingerichtet ist, und
- die Verarbeitungseinheit (4) eingerichtet ist, die Schritte eines Verfahrens nach einem der vorstehenden Ansprüche durchzuführen.

9. Fahrzeug umfassend eine Vorrichtung nach Anspruch 8.

## Claims

1. Method for collision warning by means of transport (10), comprising the steps:
- determining (100) a collision-relevant object (1a, 1b) in the surroundings of the means of transport (10),
- storing the position of the object (1a, 1b) in a first operating cycle of the means of transport (10),
- outputting (400) signals in a second operating cycle of the means of transport in response to the stored position if the position is located in a first surroundings direction (I) of the means of transport (10), wherein the means of transport (10) assumes a parked position between the first operating cycle and the second operating cycle, and in particular user authorization is interrogated again before the start of the second operating cycle, and
- in a second operating cycle of the means of transport (10), signalling in response to the stored position is omitted if the position lies in a second surroundings direction (II) of the means of transport (10).

2. Method according to Claim 1, further comprising the step of:
- checking the position of the object with respect to the first surroundings direction (I) of the means of transport (10) and/or of the second surroundings direction (II) of the means of transport (10) in the first operating cycle.

3. Method according to Claim 2, further comprising the step of characterizing the memory entry assigned to the position of the object, to the effect that the position lies in the first or the second surroundings direction of the means of transport (10).

4. Method according to one of the preceding claims, further comprising the step of:
- checking the position of the object (1a, 1b) with respect to the first surroundings direction (I) of the means of transport (10) and/or
- with respect to the second surroundings direction (II) of the means of transport (10) and the second operating cycle.

5. Method according to one of the preceding claims, wherein the first surroundings direction (I) of the means of transport (10) is arranged on a side of the means of transport (10) lying opposite the user side.

6. Method according to one of the preceding claims, wherein the second surroundings direction (II) of the means of transport (10) is arranged on the user side of the means of transport (10).

7. Method according to one of the preceding claims, wherein the signalling comprises a warning to a user of the means of transport (10).

8. Device for sensing the surroundings of the means of transport (10), comprising:
- a surroundings sensor system (2a, 2b),
- a memory unit (3), and
- a processing unit (4), wherein
- the surroundings sensor system (2a, 2b) is configured to detect a collision-relevant object (1a, 1b) in the surroundings of the means of transport (10),
- the memory unit (3) is configured to store the position of the object (2a, 2b) in a first operating cycle of the means of transport (10), and
- the processing unit (4) is configured to carry out the steps of a method according to one of the preceding claims.

9. Vehicle comprising a device according to Claim 8.

## Revendications

1. Procédé d'avertissement de collision pour un moyen de déplacement (10), comprenant les étapes de :
- détermination (100) d'un objet (1a, 1b) relatif à une collision dans l'environnement du moyen de déplacement (10),
- mémorisation de la position de l'objet (1a, 1b) dans un premier cycle de fonctionnement du moyen de déplacement (10),
- délivrance (400) d'une signalisation dans un deuxième cycle de fonctionnement du moyen de déplacement en réaction à la position mémorisée, lorsque la position se trouve dans une première direction environnante (I) du moyen de déplacement (10), le moyen de déplacement (10) adoptant une position de stationnement entre le premier cycle de fonctionnement et le deuxième cycle de fonctionnement et une autorisation d'utilisateur étant notamment une nouvelle fois interrogée avant le début du deuxième cycle de fonctionnement et
- omission d'une signalisation dans un deuxième cycle de fonctionnement du moyen de déplacement (10) en réaction à la position mémorisée, lorsque la position se trouve dans une deuxième direction environnante (II) du moyen de déplacement (10).

2. Procédé selon la revendication 1, comprenant en outre l'étape d'un
- contrôle de la position de l'objet du point de vue de la première direction environnante (I) du moyen de déplacement (10) et/ou de la deuxième direction environnante (II) du moyen de déplacement (10) dans le premier cycle de fonctionnement.

3. Procédé selon la revendication 2, comprenant en outre l'étape d'une caractérisation de l'enregistrement en mémoire associé à la position de l'objet en vue d'indiquer si la position se trouve dans la première ou la deuxième direction environnante du moyen de déplacement (10).

4. Procédé selon l'une des revendications précédentes, comprenant en outre l'étape d'un
- contrôle de la position de l'objet (1a, 1b) du point de vue de la première direction environnante (I) du moyen de déplacement (10) et/ou
- de la deuxième direction environnante (II) du moyen de déplacement (10)
dans le deuxième cycle de fonctionnement.

5. Procédé selon l'une des revendications précédentes, la première direction environnante (I) du moyen de déplacement (10) se trouvant sur un côté du moyen de déplacement (10) qui est à l'opposé du côté de l'utilisateur.

6. Procédé selon l'une des revendications précédentes, la deuxième direction environnante (II) du moyen de déplacement (10) se trouvant du côté de l'utilisateur du moyen de déplacement (10).

7. Procédé selon l'une des revendications précédentes, la signalisation comprenant un avertissement à un utilisateur du moyen de déplacement (10).

8. Dispositif de balayage de l'environnement d'un moyen de déplacement (10), comprenant
- un système de détection d'environnement (2a, 2b),
- une unité de mémoire (3) et
- une unité de traitement (4),
- le système de détection d'environnement (2a, 2b) étant conçu pour déterminer un objet (1a, 1b) relatif à une collision dans l'environnement du moyen de déplacement (10),
- l'unité de mémoire (3) étant conçue pour mémoriser la position de l'objet (2a, 2b) dans un premier cycle de fonctionnement du moyen de déplacement (10) et
- l'unité de traitement (4) étant conçue pour exécuter les étapes d'un procédé selon l'une des revendications précédentes.

9. Véhicule comprenant un dispositif selon la revendication 8.
